# EUROPÄISCHE PATENTANMELDUNG

(11) **EP 4 027 206 A2**
(43) Veröffentlichungstag der Anmeldung: **13.07.2022**
(21) Anmeldenummer: 21210962.3
(22) Anmeldetag: 29.11.2021
(51) Int. Cl.: G05B 19/042

(54) **VERFAHREN ZUM ÜBERWACHEN VON ZUSTÄNDEN VON ENTITÄTEN**

(30) Priorität: 11.01.2021 DE 102021200192
(71) Anmelder: GEZE GmbH, 71229 Leonberg (DE)
(72) Erfinder: Jauß, Dominik, 71229 Leonberg (DE)

(57) **Zusammenfassung**

Die vorliegende Erfindung betrifft ein Verfahren zum Überwachen von Zuständen von einer oder mehreren Entitäten, aufweisend:

Empfangen (101) von spezifischen Entitäts-Daten einer spezifischen Entität;

Ermitteln (103), wenigstens basierend auf zumindest einigen der empfangenen spezifischen Entitäts-Daten mittels eines Prozessierungs-Moduls (3), von einer oder mehreren spezifischen Bewertungs-Daten in Bezug auf wenigstens einen spezifischen Zustand der spezifischen Entität;

wobei die Entitäten automatische Türanlagen, automatische Toranlagen, automatische Fensteranlagen und/oder automatische Lichtanlagen aufweisen und/oder darstellen.

## Beschreibung

### Gebiet der Technik

Die vorliegende Erfindung betrifft ein erstes Verfahren zum Überwachen von Zuständen von einer oder mehreren Entitäten, ein zweites Verfahren, das mit dem ersten Verfahren zusammenwirken kann, ein drittes Verfahren zum Generieren eines Trainings-Datensatzes zum Trainieren eines Datenmodells für das maschinelle Lernen, das in dem ersten Verfahren verwendet werden kann, ein viertes Verfahren zum Trainieren eines solchen Datenmodells für das maschinelle Lernen sowie Vorrichtungen, ein Computerprogrammprodukt und eine Signalfolge.

### Stand der Technik

Bei dem Betrieb von automatischen Anlagen, wie automatische Tür- und Fensteranlagen, ist im Störungsfall häufig der Einsatz eines Technikers notwendig, welcher vor Ort die Anlage inspizieren und den aufgetretenen Fehler ermitteln und anschließend beheben muss. Dies kann einen aufwändigen und damit zeit- und kostenintensiven Prozess darstellen.

### Zusammenfassung der Erfindung

Es ist daher Aufgabe der vorliegenden Erfindung, die beschriebenen Nachteile des Stands der Technik zu überwinden und insbesondere Mittel bereitzustellen, mit denen der Betrieb und die Instandsetzung von automatischen Anlagen sicherer, zuverlässiger und effizienter gestaltet werden kann.

Die Aufgabe wird durch die Erfindung gemäß einem ersten Aspekt dadurch gelöst, dass ein Verfahren zum Überwachen von Zuständen von einer oder mehreren Entitäten, aufweisend:
Empfangen von spezifischen Entitäts-Daten einer spezifischen Entität;
Ermitteln, wenigstens basierend auf zumindest einigen der empfangenen spezifischen Entitäts-Daten mittels eines Prozessierungs-Moduls, von einer oder mehreren spezifischen Bewertungs-Daten in Bezug auf wenigstens einen spezifischen Zustand der spezifischen Entität;
wobei die Entitäten automatische Türanlagen, automatische Toranlagen, automatische Fensteranlagen und/oder automatische Lichtanlagen aufweisen und/oder darstellen vorgeschlagen wird.

Der Erfindung liegt damit die überraschende Erkenntnis zugrunde, dass das zentrale Zusammenführen aller Entitäts-Daten und das Konvertieren dieser häufig sehr kleinteiligen Informationen in eine möglichst kompakte und aussagekräftige Darstellung in Form von Bewertungs-Daten eine besonders zuverlässige Bewertung eines spezifischen Zustands einer spezifischen Entität zulässt.

Damit ist eine besonders zuverlässige Überwachung und entsprechend ein besonders zuverlässiger Betrieb solcher Entitäten möglich. Es wurde vor allem festgestellt, dass sich durch das zentrale Vorhalten und Auswerten der Daten Fehlfunktionen und Störungen von spezifischen Entitäten teilweise bereits vor ihrem Eintritt erkannt werden können. Durch die Bereitstellung von Bewertungs-Daten können zielgerichtet Maßnahmen ergriffen werden, um den ordnungsgemäßen Betrieb der jeweiligen Entität aufrechtzuerhalten, oder ggf. zeitnah wiederherzustellen.

Das vorgeschlagene Verfahren ermöglicht es dabei, sowohl eine kontinuierliche Überwachung von Entitäten durchzuführen als auch eine anlassbezogene, etwa im Rahmen einer Routineüberprüfung. In beiden Fällen können die Bewertungs-Daten die notwendigen Informationen liefern, um den jeweiligen spezifischen Zustand der Entität effizient beurteilen zu können.

So kann ein ordnungsgemäßer Betrieb der spezifischen Entität durch geeignete Maßnahmen, wie das Übertragen neuer Konfigurations-Daten zu der spezifischen Entität, auch aus der Ferne wiederhergestellt oder sichergestellt werden. Damit kann ein drohender oder bereits eingetretener kritischer Betrieb der spezifischen Entität sogar ganz ohne Ausrücken eines Technikers vollautomatisch behoben werden. Dies erlaubt einen sehr sicheren Betrieb der Entität und den effizienten Einsatz von Ressourcen.

Durch das Verarbeiten der Daten durch eine zentralen Instanz können beispielsweise einem Techniker für einen notwendigen Einsatz neben dem reinen Alarm über eine eingetretene oder drohende Fehlfunktion oder Störung einer spezifischen Entität auch gleichzeitig weitere hilfreiche Daten in Bezug auf die spezifische Entität vorab bereitgestellt werden. Dadurch kann der Einsatz des Technikers sehr viel zielgerichteter und damit effizienter ablaufen. Dies verringert die Einsatzdauer des Technikers beim Beheben der Störung der Entität. Dadurch werden etwaige Ausfallzeiten der Entität durch das koordinierte Vorgehen reduziert oder können sogar ganz vermieden werden.

Beispielsweise können die Entitäts-Daten Daten, die direkt oder indirekt im Zusammenhang mit der spezifischen Entität und/oder ihres laufenden Betriebs stehen, aufweisen. Die Entitäts-Daten können etwa Feldinformationen aufweisen, die zum Beispiel Daten zu einem Betriebszustand, Anwendungsfall und/oder Umgebungsinformationen, wie Umgebungstemperatur oder Umgebungs-Luftfeuchtigkeit, zu der spezifischen Entität aufweisen. Beispielsweise können die Bewertungs-Daten Daten, die eine Beurteilung des spezifischen Zustands der spezifischen Entität, etwa hinsichtlich Art, Ursache, mögliche Lösung und/oder Kritikalität, ermöglichen, aufweisen. Die Bewertungs-Daten können vorzugsweise in einem für den Menschen und/oder für eine Maschine lesbaren Format dargestellt sein.

Damit ermöglicht es das vorgeschlagene Verfahren, dass aktuelle Daten zu Entitäten an zentraler Stelle zusammengeführt, ausgewertet und/oder verarbeitet werden können. Damit ist ein vollständiger Überblick über die Datenlage der spezifischen Entität möglich. Dies wiederum ermöglicht eine sehr effiziente und zuverlässige Beurteilung des spezifischen Zustands der spezifischen Entität. Das Verfahren erlaubt dadurch eine Überwachung der Zustände von Entitäten und eine passende Reaktion auf etwaige Störungen und Fehlfunktionen. Die Reaktion kann dabei automatisch anhand und/oder abhängig von den Bewertungs-Daten erfolgen. Außerdem können alle Daten, die zur Störungserkennung und -behebung relevant sind, zentral verfügbar gemacht werden. Damit können die Serviceabläufe zur Störungsbehebung effizient ablaufen.

Das Erfassen der Entitäts-Daten kann dabei ganz oder teilweise automatisch erfolgen. Das Erfassen der Entitäts-Daten kann dabei alternativ oder ergänzend einmalig, anlassbezogen, fortlaufend oder eine Kombination aus diesen erfolgen. Das fortlaufende Empfangen von Entitäts-Daten erlaubt eine kontinuierliche Überwachung der spezifischen Entität. Das einmalige oder anlassbezogene Empfangen von Entitäts-Daten ermöglicht es, beispielsweise bei einer routinemäßigen Inspektion einer spezifischen Entität Bewertungs-Daten zu dem aktuellen Zustand der spezifischen Entität zu erhalten. Beispielsweise können einige oder alle Entitäts-Daten, insbesondere von Seiten der spezifischen Entität, fortlaufend in Echtzeit empfangen werden. "Echtzeit" kann hierbei bedeuten, dass Entitäts-Daten empfangen werden, sobald sie auf der sendenden Seite vorliegen und daraufhin von dort bezogen werden können. Dies macht eine besonders engmaschige Überwachung der spezifischen Entität möglich. Beispielsweise können auch einige oder alle Entitäts-Daten, insbesondere von Seiten der spezifischen Entität, fortlaufend in festgelegten Intervallen, etwa zwischen 1 Minute und 60 Minuten oder zwischen 1 Stunde und 24 Stunden, empfangen werden. Dies ermöglicht eine effiziente Überwachung der spezifischen Entität möglich.

Es müssen dabei nicht alle spezifischen Entitäts-Daten gleichzeitig empfangen werden. Beispielsweise können spezifischen Entitäts-Daten, die nicht zur Ermittlung der spezifischen Bewertungs-Daten benötigt werden, zu einem anderen, vorzugsweise späteren, Zeitpunkt empfangen werden als die zur Ermittlung der spezifischen Bewertungs-Daten notwendigen spezifischen Entitäts-Daten.

Insbesondere können mit dem vorgeschlagenen Verfahren die Zustände von mehr als einer Entität, vorzugsweise von mehr als 5 Entitäten, vorzugsweise von mehr als 10 Entitäten, vorzugsweise von mehr als 30 Entitäten, vorzugsweise von mehr als 50 Entitäten, vorzugsweise von mehr als 100 Entitäten, vorzugsweise von mehr als 300 Entitäten, vorzugsweise von mehr als 500 Entitäten, vorzugsweise von mehr als 1.000 Entitäten, vorzugsweise von mehr als 3.000 Entitäten, vorzugsweise von mehr als 5.000 Entitäten, vorzugsweise von mehr als 10.000 Entitäten, vorzugsweise von mehr als 30.000 Entitäten, vorzugsweise von mehr als 50.000 Entitäten, überwacht werden.

Ein "Modul", wie etwa das Prozessierungs-Modul, im Sinne der vorliegenden Erfindung kann beispielsweise in Software, in Hardware oder einer Kombination von beidem realisiert sein. Ein "Modul" im Sinne der vorliegenden Erfindung kann alternativ oder ergänzend einen Speicher, einen Prozessor, eine Empfangseinrichtung, eine Sendeeinrichtung oder eine beliebige Kombination davon aufweisen. Ein "Modul" im Sinne der vorliegenden Erfindung kann alternativ oder ergänzend alles, was von ihm aufgewiesen ist, wie insbesondere alle dafür notwendigen Ressourcen, beispielsweise in Form von Software- und/oder Hardwareressourcen, für das Verfahren bereitstellen und/oder verfügbar machen und/oder aufweisen. Ein "Modul" im Sinne der vorliegenden Erfindung kann alternativ oder ergänzend eine rein logische oder tatsächliche Gruppierung von Anweisungen innerhalb eines Programms oder eines Verfahrensablaufs darstellen und/oder aufweisen. Ein "Modul" im Sinne der vorliegenden Erfindung kann alternativ oder ergänzend eine Klasse, eine Funktion, eine Datei und/oder eine Programm-Bibliothek sein und/oder aufweisen, die auswählbar, aufrufbar, ausführbar, in einen Speicher ladbar und/oder in einem Speicher dauerhaft oder vorübergehend vorhaltbar ist.

In einer Ausführungsform werden zumindest einige der Entitäts-Daten von Seiten der spezifischen Entität und/oder eines Clients, wie einem Smartphone oder einer auf dieser laufenden mobilen Anwendung, empfangen.

In einer Ausführungsform ist der spezifische Zustand der spezifischen Entität ein aktueller Zustand der spezifischen Entität.

Vorzugsweise sind die beteiligten Entitäten dabei alle vom gleichen Typ (beispielsweise alle in Form von automatischen Türanlagen) oder die beteiligten Entitäten sind alle oder zum Teil von einem unterschiedlichen Typ.

In einer Ausführungsform weist eine automatische Türanlage eine automatische Schiebetüre, eine automatische Drehtüre und/oder eine automatische Karusselltüre auf oder stellt diese dar.

In einer Ausführungsform weist eine automatische Lichtanlage eine automatische Oberlichtanlage auf oder stellt diese dar.

In einer Ausführungsform ist das Verfahren computer-implementiert.

In einer Ausführungsform wird das Verfahren von einer zentralen Instanz ausgeführt, wie einem Server oder einem Cloud-System. Das Verfahren kann alternativ oder ergänzend durch ein eingebettetes System und/oder durch ein Betriebssystem ausgeführt werden.

In einer Ausführungsform ist die spezifische Entität eine der einen oder mehreren Entitäten.

Damit eignet sich das vorgeschlagene Verfahren besonders gut für den Einsatz mit automatischen Anlagen in Form von automatischen Türanlagen, automatischen Toranlagen, automatischen Fensteranlagen und/oder automatischen Lichtanlagen, insbesondere für das Überwachen von deren Zuständen.

In einer bevorzugten Ausführungsform kann vorgesehen sein, dass die empfangenen spezifischen Entitäts-Daten Daten aus wenigstens einer, insbesondere aus zwei, drei oder mehr als drei unterschiedlichen, Daten-Gruppe aufweisen, wobei vorzugsweise die Daten-Gruppe(n) ausgewählt ist bzw. sind aus der folgenden Liste von Daten-Gruppen aufweisend:
- Erste Daten-Gruppe: Daten zu wenigstens einem aktuellen Zustand der spezifischen Entität;
- Zweite Daten-Gruppe: Daten zu wenigstens aktuellen Betriebsdaten der spezifischen Entität;
- Dritte Daten-Gruppe: Daten zu wenigstens einem aktuell bestehenden Fehler der spezifischen Entität;
- Vierte Daten-Gruppe: Daten zu wenigstens einem bestehenden und noch nicht behobenen Fehler der spezifischen Entität;
- Fünfte Daten-Gruppe: Daten zu den Konfigurationsmöglichkeiten der spezifischen Entität;
- Sechste Daten-Gruppe: Daten zu der aktuellen Konfiguration der spezifischen Entität;
- Siebente Daten-Gruppe: Daten zu wenigstens einer Eigenschaft der spezifischen Entität;
- Achte Daten-Gruppe: Daten zu der Lokation der spezifischen Entität;
- Neunte Daten-Gruppe: Daten zum Kunden, Betreiber und/oder Besitzer der spezifischen Entität;
- Zehnte Daten-Gruppe: Daten zur Dokumentation der spezifischen Entität;
- Elfte Daten-Gruppe: Daten zu der Einbausituation der spezifischen Entität; und/oder
- Zwölfte Daten-Gruppe: Daten zu historischen Zuständen der spezifischen Entität, insbesondere in Verbindung mit Daten zu der Konfiguration der spezifischen Entität zum Zeitpunkt eines jeweiligen historischen Zustands.

Durch das Einbeziehen von spezifischen Entitäts-Daten unterschiedlicher Daten-Gruppen kann ein besonders guter Überblick über die spezifische Entität erhalten werden. Dementsprechend können auch besonders genaue und aussagekräftige Bewertungs-Daten ermittelt werden.

Dies wiederum ermöglicht es, dass zuverlässig eine zielgerichtete Maßnahme auf den spezifischen Zustand der spezifischen Entität hin ausgewählt und ergriffen werden kann.

Beispielsweise können Daten zu einem aktuellen Zustand der spezifischen Entität "Betrieb eingeschränkt" aufweisen. Beispielsweise können Daten zu einem aktuell bestehenden Fehler der spezifischen Entität "Motorsteuerung defekt" aufweisen. Beispielsweise können Daten zu einem bestehenden und noch nicht behobenen Fehler der spezifischen Entität "Motorsteuerung seit 1 Stunde defekt" aufweisen. Beispielsweise können Daten zu den Konfigurationsmöglichkeiten der spezifischen Entität eine Dokumentation zu den verfügbaren Konfigurationsmöglichkeiten aufweisen. Beispielsweise können Daten zu der aktuellen Konfiguration der spezifischen Entität Parameter und dafür definierte Werte der Einstellungen aufweisen (zum Beispiel "Drehgeschwindigkeit=5 U/Min" bei einer Karusselltüre).

Mit Daten zu historischen Zuständen der spezifischen Entität kann besonders einfach und zuverlässig ermittelt werden, wie der spezifische Zustand eingetreten ist. In einer Ausführungsform werden daher die spezifischen Bewertungs-Daten ferner basierend auf Daten zu historischen Zuständen der spezifischen Entität, insbesondere der historischen Zustände in einem vorausgehenden Zeitintervall von bis zu 0,25 Stunden, 0,5 Stunden, 1 Stunde, 3 Stunden, 6 Stunden, 12 Stunden, 18 Stunden, 1 Tag, 3 Tagen, 7 Tagen 14 Tagen, 30 Tagen oder mehr als 30 Tagen, ermittelt.

In einer bevorzugten Ausführungsform kann vorgesehen sein, dass das Empfangen der spezifischen Entitäts-Daten aufweist:
Empfangen von ersten Daten zu der spezifischen Entität, insbesondere von Seiten wenigstens einer ersten Quelle, vorzugsweise von Seiten der spezifischen Entität, wobei vorzugsweise die ersten Daten Daten der ersten, zweiten, dritten, vierten, fünften, sechsten, siebenten und/oder zwölften Daten-Gruppe aufweisen;
   und/oder
Empfangen von zweiten Daten zu der spezifischen Entität, insbesondere von Seiten wenigstens einer zweiten Quelle, vorzugsweise aus einem Speicher und/oder von Seiten eines ERP-Systems, wobei vorzugsweise die zweiten Daten Daten der fünften, sechsten, siebenten, achten, neunten, zehnten, elften und/oder zwölften Daten-Gruppe aufweisen.

Da das Verfahren mit unterschiedlichen Quellen kommunizieren kann, kann es besonders einfach und nahtlos in eine bestehende Infrastruktur eingebunden werden. Das Verfahren ist damit sehr universell einsetzbar.

Von den unterschiedlichen Quellen können die Entitäts-Daten zu unterschiedlichen Zeitpunkten und/oder in unterschiedlichen Intervallen empfangen werden. Dadurch kann die Systembelastung reduziert werden, da Ressourcen gleichmäßig in Anspruch genommen werden. In einer Ausführungsform werden alle oder einige nicht für die Ermittlung der spezifischen Bewertungs-Daten notwendigen spezifischen Entitäts-Daten zu einem späteren Zeitpunkt empfangen als die für die Ermittlung der spezifischen Bewertungs-Daten notwendigen spezifischen Entitäts-Daten.

Beispielsweise kann eine zweite Quelle ein Enterprise-Resource-Planning (ERP) - System sein. Dann können von dort spezifische Entitäts-Daten empfangen werden. In einem ERP-System können beispielsweise Daten zu dem Modell, der Einbausituation, der Lokation, den Produkteigenschaften, den Serviceinformationen, den Dokumentationen, dem Kunden, dem Besitzer und/oder dem Betreiber der spezifischen Entität vorgehalten werden. Diese Daten können ganz oder teilweise von Seiten des ERP-Systems empfangen werden.

Eine zweite Quelle kann alternativ oder ergänzend auch ein Client sein. Dieser Client kann beispielsweise durch einen Techniker vor Ort bei der spezifischen Entität bedient werden, der damit spezifische Bewertungs-Daten zu einem aufgetretenen Problem erhalten kann. Dazu können von Seiten des Clients beispielsweise zusätzliche spezifische Entitäts-Daten über die Entität, wie deren Einbausituation und Lokation, aus dem Feld empfangen werden. Es können daher auch von mehr als einer ersten Quelle und/oder von mehr als einer zweiten Quelle spezifische Entitäts-Daten empfangen werden, insbesondere zu gleichen und/oder unterschiedlichen Zeitpunkten.

In einer Ausführungsform werden die von den spezifischen Entitäts-Daten aufgewiesenen einzelnen Daten zumindest teilweise zu unterschiedlichen Zeitpunkten empfangen, insbesondere die ersten Daten zu einem ersten Zeitpunkt und die zweiten Daten zu einem zweiten Zeitpunkt, der vorzugsweise vor oder nach dem ersten Zeitpunkt liegt. Alternativ oder ergänzend werden die spezifischen Entitäts-Daten, die für die Verarbeitung mittels des Prozessierungs-Moduls benötigt werden, ganz oder teilweise zu einem anderen Zeitpunkt empfangen als die übrigen spezifischen Entitäts-Daten.

Damit kann das Verfahren besonders effizient arbeiten. Denn zunächst müssen nur die spezifischen Entitäts-Daten vorliegen, welche für das Prozessierungs-Modul relevant sind, damit dieses ausgeführt werden kann. Die übrigen spezifischen Entitäts-Daten (also etwa die, die für das Prozessierungs-Modul nicht relevant sind) können zu einem anderen Zeitpunkt empfangen werden, wenn etwa die Systemauslastung gering ist, oder wenn feststeht, dass sie wirklich benötigt werden. Je nach ermittelten spezifischen Bewertungs-Daten können unterschiedliche Entitäts-Daten relevant werden.

In einer bevorzugten Ausführungsform kann vorgesehen sein, dass das Verfahren ferner aufweist:
(i) Erzeugen eines Kontrollsignals basierend wenigstens auf den und/oder in Abhängigkeit der spezifischen Bewertungs-Daten, wobei vorzugsweise das Erzeugen des Kontrollsignals das Analysieren und/oder Verarbeiten der spezifischen Bewertungs-Daten und/oder zumindest einige der spezifischen Entitäts-Daten aufweist,
   und wobei vorzugsweise das Kontrollsignal indikativ ist für wenigstens ein Ergebnis der Analyse bzw. Verarbeitung, es insbesondere indikativ ist für
   - eine Art des spezifischen Zustands der spezifischen Entität, wie beispielsweise in Form eines Betriebszustands, insbesondere eines Online- und/oder Offline-Zustandes, und/oder eines Fehlerstatus;
   - eine Ursache oder mögliche Ursache des spezifischen Zustands der spezifischen Entität, beispielsweise in Form eines Fehlerstatus;
   - eine Notwendige oder empfohlene Maßnahmen in Bezug auf den spezifischen Zustand der spezifischen Entität, wie beispielsweise, dass eine Wartung fällig ist; und/oder
   - eine Kritikalität des spezifischen Zustands der spezifischen Entität;
(ii) Auswählen, Ausführen und/oder Kontrollieren wenigstens eines Moduls basierend auf dem Kontrollsignal, insbesondere basierend darauf, für was es indikativ ist;
   und/oder
(iii) Senden des Kontrollsignals an wenigstens einen Empfänger.

Das Kontrollsignal ermöglicht es besonders einfach und effizient, auf Grundlage bzw. in Abhängigkeit der spezifischen Bewertungs-Daten und damit auf Grundlage bzw. in Abhängigkeit des spezifischen Zustands der spezifischen Entität, andere technische Systeme zu beeinflussen, insbesondere zu kontrollieren. Dadurch kann das Verfahren nahtlos in eine bestehende Infrastruktur eingebunden werden. Dies macht das Verfahren besonders universell einsetzbar.

Der Empfänger des Kontrollsignals kann dabei die gleiche Instanz sein, die auch das Verfahren ausführt, und/oder eine davon unterschiedliche. Beispielsweise kann der Empfänger die spezifische Entität oder ein Client, wie ein Smartphone, sein.

Insbesondere wenn das Kontrollsignal indikativ für ein Ergebnis der Analyse bzw. Verarbeitung ist, kann es besonders gut dazu verwendet werden, ein oder mehrere andere Module zielgerichtet auszuwählen, auszuführen und/oder zu kontrollieren. Innerhalb der jeweiligen Module können dann jeweils bestimmte in Abhängigkeit des Kontrollsignals geeignete Maßnahmen durchgeführt werden. Wenn eine Fehlfunktion oder Störung erkannt wurde, kann zum Beispiel ein automatisches Wiederherstellungs-Modul aktiviert werden, das die spezifische Entität wieder in den ordnungsgemäßen Zustand versetzt. Beispielsweise kann dies durch Wiederherstellung einer früheren Entitäts-Konfiguration erfolgen. Alternativ oder ergänzend kann auch ein Alarm-Modul aktiviert werden, wodurch eine Leitstelle und/oder ein Techniker alarmiert wird bzw. werden.

In einer Ausführungsform weist das Kontrollsignal zumindest einige der spezifischen Entitäts-Daten, insbesondere einige der zweiten Daten zu der Entität, auf. Vorteilhafterweise weist das Kontrollsignal Daten zu der spezifischen Entität aus einem ERP-System auf. So können Zustandsdaten, Fehlerdaten Konfigurationsdaten und Entitätseigenschaften nebst anderen wartungsrelevanten Daten der Entität sowie deren Kundendaten zusammen mit dem Kontrollsignal bereitgestellt werden.

Dadurch ist ein besonders effizienter Ablauf des Verfahrens möglich. Es ist somit nicht notwendig, dass in einem separaten Ablauf diese Daten angefordert, zusammengetragen und/oder bereitgestellt werden müssen. Dies spart Ressourcen, die etwa auch für Verbindungsauf- und -abbau sowie Nutzeridentifizierung und -authentifizierung notwendig sind. Damit wird in Summe die Überwachung von Entitäten sowie deren Wartung und Störungsbehebung effizienter möglich.

Beispielsweise kann einem Modul, das eine erkannte Störung oder Fehlfunktion automatisch beheben soll, auf diese Weise Daten über Art, Kritikalität, mögliche Ursache und Maßnahme zur Störungsbehebung direkt mitgeteilt werden.

In einer Ausführungsform weist das Modul ein Datenweiterleitungsmodul auf. Damit können die Daten mittels des Moduls an das richtige Ziel, wie ein weiteres Modul, weitergeleitet werden. Beispielsweise kann diese Weiterleitung durch das Datenweiterleitungsmodul in Abhängigkeit der Kritikalität und/oder der Systemauslastung gesteuert werden. Dies macht einen effizienten Betrieb möglich.

Optional werden zumindest einige der spezifischen Entitäts-Daten, insbesondere zumindest einige der spezifischen Entitäts-Daten, die das Kontrollsignal aufweist, erst im Zusammenhang mit dem Erzeugen des Kontroll-Signals empfangen. Dies spart Ressourcen, da nur die für das Kontrollsignal relevanten Daten empfangen werden müssen.

In einer Ausführungsform weist das Kontrollsignal ein analoges Signal und/oder ein Digitalsignal auf. Alternativ oder ergänzend kann das Kontrollsignal das Ergebnis der Analyse direkt repräsentieren, etwa in codierter Darstellung, und damit für dieses indikativ sein.

Das Kontrollsignal ist also vorzugsweise dergestalt, dass damit Daten und somit Informationen an andere Beteiligte, wie beispielsweise andere Module, mitgeteilt und/oder über das Internet übertragen werden können.

In einer bevorzugten Ausführungsform kann vorgesehen sein, dass das Prozessierungs-Modul aufweist, dass die spezifischen Bewertungs-Daten ferner basierend auf einer Sammlung aufweisend mehrere jeweils miteinander assoziierten Entitäts-Daten und zugehörigen Bewertungs-Daten ermittelt werden.

Dabei wird ausgenutzt, dass bereits für mehrere Entitäten jeweils eine Kombination von Entitäts-Daten und Bewertungs-Daten als Sammlung bekannt ist. Wenn basierend auf der Sammlung dann die spezifischen Bewertungs-Daten ermittelt werden, können die der Sammlung zugrunde liegenden Daten direkt oder indirekt verwendet werden. Das heißt, auf die Daten der einzelnen Bewertungs-Daten und Entitäts-Daten der Sammlung kann direkt zugegriffen werden. Andererseits kann es auch möglich sein, dass diese Daten nicht bzw. nicht mehr direkt zugänglich sind und dann nur indirekt verfügbar sind, indem beispielsweise auf Daten in weiterverarbeiteter Form zurückgegriffen wird. Die indirekte Verfügbarkeit kann beispielsweise vorliegen, wenn basierend auf den einzelnen von der Sammlung umfassten Entitäts-Daten und Bewertungs-Daten ein Datenmodell trainiert wurde.

Wenn die Sammlung assoziierte Entitäts- und Bewertungs-Daten aufweist, können anhand der empfangenen spezifischen Entitäts-Daten passende spezifische Bewertungs-Daten mittels der Sammlung ermittelt werden. Beispielsweise können diejenigen Bewertungs-Daten als spezifische Bewertungs-Daten ermittelt werden, welche mit ähnlichen oder sogar identischen Entitäts-Daten wie die entsprechenden Teile der empfangenen spezifischen Entitäts-Daten assoziiert sind.

In einer Ausführungsform weist die Sammlung nur Daten in Bezug auf bestimmten Entitäten auf, wobei vorzugsweise die bestimmten Entitäten gleichen Typs wie die spezifische Entität sind.

In einer Ausführungsform kann vorgesehen sein, dass die Bewertungs-Daten, insbesondere die spezifischen Bewertungs-Daten, und/oder die Entitäts-Daten auf Vollständigkeit geprüft werden und/oder im Falle des Feststellens der Unvollständigkeit aller oder Teile dieser Daten, die Daten, insbesondere die Bewertungs-Daten, verworfen werden. Damit kann ein sicherer Betrieb ermöglicht werden, da einer unvollständigen Datensituation frühzeitig begegnet werden kann.

In einer Ausführungsform kann vorgesehen sein, dass das Prozessierungs-Modul ferner aufweist, dass die Bewertungs-Daten, insbesondere die spezifischen Bewertungs-Daten, und/oder die Entitäts-Daten mit einem Zeitstempel versehen werden. Dadurch können Parameteränderungen erkannt und zuverlässig behandelt werden, wodurch der Betrieb sicherer wird.

In einer bevorzugten Ausführungsform kann vorgesehen sein, dass das Prozessierungs-Modul aufweist, dass eine Korrelation wenigstens zwischen einem Teil der empfangenen spezifischen Entitäts-Daten und Entitäts-Daten der Sammlung von Daten durchgeführt wird, und dass aus der Sammlung diejenigen Bewertungs-Daten als spezifische Bewertungs-Daten verwendet werden, die mit Entitäts-Daten assoziiert sind, für die die Korrelation einen maximalen Korrelationswert aufweist;
und/oder
das Prozessierungs-Modul wenigstens ein trainiertes Datenmodell für das maschinelle Lernen aufweist, und vorzugsweise das Datenmodell für das maschinelle Lernen anhand einer Vielzahl von Merkmals-Vektoren und zugehörigen Wahrheits-Vektoren trainiert wurde, wobei mittels des Datenmodells für das maschinelle Lernen anhand der zumindest einigen der empfangenen spezifischen Entitäts-Daten die spezifischen Bewertungs-Daten ermittelt werden,
wobei vorzugsweise die Merkmals- und zugehörigen Wahrheitsvektoren jeweils die miteinander assoziierten Entitäts-Daten und Bewertungs-Daten der Sammlung von Daten aufweisen oder darstellen.

Die Bewertungs-Daten lassen sich damit besonders zuverlässig und effizient mittels des Prozessierungs-Moduls auf Basis zumindest Teilen der empfangenen Daten und der Daten aus der Sammlung ermitteln.

Durch eine Korrelation lässt sich der spezifische Zustand der spezifischen Entität effizient bewerten. Damit können die Störungsbehebung und Inbetriebnahme einer ausgefallenen Entität schnell durchgeführt werden oder eine drohende Fehlfunktion oder Störung sogar ganz vermieden werden.

Indem eine Korrelation durchgeführt wird, kann besonders einfach und schnell direkt basierend auf der Sammlung von Entitäts-Daten mit jeweils assoziierten Bewertungs-Daten die passenden spezifischen Bewertungs-Daten für die spezifische Entität ermittelt werden.

Indem ein trainiertes Datenmodell für das maschinelle Lernen eingesetzt wird, kann ein besonders zuverlässiges Ergebnis für die spezifischen Bewertungs-Daten ermittelt werden. Bei dieser indirekt auf der Sammlung von Entitäts-Daten mit jeweils assoziierten Bewertungs-Daten basierenden Ermittlung der spezifischen Bewertungs-Daten genügt die Eingabe der entsprechenden spezifischen Entitäts-Daten der spezifischen Entität, um von dem trainierten Datenmodell die spezifischen Bewertungs-Daten für die spezifische Entität zu erhalten. Die Ermittlung der spezifischen Bewertungs-Daten erfolgt dabei durch das Datenmodell unter Berücksichtigung aller während des Trainings verwendeten Entitäts-Daten mit ihren assoziierten Bewertungs-Daten. Auch wenn kein direkter Zugriff auf die einzelnen zum Lernen des Datenmodells verwendeten Daten mehr möglich ist, erweisen sich die auf diese Weise erhaltenen spezifischen Bewertungs-Daten als für den gewünschten Einsatzzweck sehr zuverlässig geeignet.

In einer Ausführungsform weist das Prozessierungs-Modul einen Entscheidungsbaum oder ein neuronales Netz auf, oder ist darauf gerichtet.

In einer Ausführungsform wird das trainierte Datenmodell für das maschinelle Lernen in Abhängigkeit des Typs der Entität gewählt. Typen von Entitäten können beispielsweise automatische Türanlagen, automatische Toranlagen, automatische Fensteranlagen und/oder automatische Lichtanlagen sein. Beispielsweise wird für den Typ automatische Türanalage und für den Typ automatische Fensteranlage jeweils ein eigenes trainiertes Datenmodell für das maschinelle Lernen gewählt. Weitere Gliederungen sind möglich, und es kann jeweils ein eigenes trainiertes Datenmodell für das maschinelle Lernen verwendet werden. Etwa für jedes Modell eines Typs, für jede Variante eines Modells und/oder für jede Version einer Variante. Dies macht das eingesetzte trainierte Datenmodell für das maschinelle Lernen jeweils besonders wirkungsvoll.

Der Einsatz eines trainierten Datenmodells für das maschinelle Lernen kann auch deshalb besonders bevorzugt sein, da im Gegensatz zu anderen Maßnahmen dann im Vergleich zu den Bewertungs-Daten der Sammlung auch bisher nicht präsentierte Bewertungs-Daten mittels des trainierten Datenmodells für das maschinelle Lernen als spezifische Bewertungs-Daten erhalten werden können. Denn mittels des trainierten Datenmodells ermittelte spezifische Bewertungs-Daten sind nicht zwingend auf die dem Training zugrunde liegenden Bewertungs-Daten beschränkt. Sie können vielmehr auf dem Zusammenwirken aller assoziierten Entitäts-Daten und Bewertungs-Daten basieren. Das Datenmodell für das maschinelle Lernen "lernt" während dem Training eine Beziehung zwischen den für die Entitäten angegebenen Entitäts-Daten und den jeweils assoziierten Bewertungs-Daten. So kann das Datenmodell im trainierten Zustand anhand der Eingabe von spezifischen Entitäts-Daten die passenden spezifischen Bewertungs-Daten vorschlagen. Daher werden zum Training vorzugsweise solche Trainings-Daten verwendet, die einem bestimmten Typ der Entitäten entsprechend.

In einer Ausführungsform weisen die Merkmals-Vektoren Entitäts-Daten auf und/oder die zugehörigen Wahrheits-Vektoren weisen die zugehörigen Bewertungs-Daten der entsprechenden Entität auf oder repräsentieren diesen. Optional sind die Bewertungs-Daten dann bestätigte oder angepasste Bewertungs-Daten, die ein für den jeweiligen Wahrheits-Vektor als angemessen beurteilte Bewertungs-Daten aufweisen.

Damit kann vorliegend mittels "Big Data", also auf Grundlage einer ausreichend großen Datenbasis mit entsprechenden Entitäts-Daten und Bewertungs-Daten zu Entitäten, optimierte Bewertungs-Daten für spezifische Entitäten erhalten werden. Beispielsweise kann die Datenbasis Daten zu mehr als 100, mehr als 1.000, mehr als 5.000 oder mehr als 10.000 Entitäten aufweisen.

In einer bevorzugten Ausführungsform kann vorgesehen sein, dass das Verfahren ferner aufweist:
Anpassen der Sammlung von Daten anhand zumindest eines Teils der spezifischen Entitäts-Daten und/oder anhand zumindest eines Teils der spezifischen Bewertungs-Daten, wobei das Anpassen der Sammlung vorzugsweise aufweist, dass zumindest Teile dieser Daten miteinander assoziiert werden, in der Sammlung aufgenommen werden und/oder das Datenmodell für das maschinelle Lernen darauf trainiert wird.

Indem die Sammlung anhand der spezifischen Entitäts- und Bewertungs-Daten angepasst wird, kann der Datenumfang stetig zunehmen. Damit werden die ermittelten spezifischen Bewertungs-Daten mit der Zeit immer zuverlässiger.

Dabei kann es vorteilhaft sein, dass die in die Sammlung aufgenommenen Bewertungs-Daten ggf. angepasst werden, um für Entitäts-Daten bevorzugte Bewertungs-Daten assoziiert zu haben. Mit anderen Worten, können so für bestimmte Entitäts-Daten als für geeignet erachtete Bewertungs-Daten hinterlegt werden. Das Anpassen oder Auswählen der bevorzugten Bewertungs-Daten kann automatisch mittels eines Überwachungsmoduls erfolgen, oder manuell durch einen Benutzer.

Vorzugsweise sind die Entitäts-Daten historische Entitäts-Daten und/oder die zugehörigen Bewertungs-Daten bestätigte und/oder angepasste Bewertungs-Daten.

Wenn beispielsweise spezifische Entitäts-Daten empfangen werden, die einen Fehler der Motorsteuerung der Entität signalisieren und eine Lokalität der Entität mit einer Frequenz von mehr als 1.000 Personen pro Stunde, so können diese Entitäts-Daten zusammen mit manuell vorgegebenen oder angepassten Bewertungs-Daten, die als Maßnahme einen Techniker-Einsatz innerhalb von 1 Stunde erfordern in der Sammlung aufgenommen werden.

Wenn beispielsweise Entitäts-Daten empfangen wurden, die einen Fehler der Motorsteuerung der Entität signalisieren und eine Lokalität der Entität mit einer Frequenz von zwischen 10 und 20 Personen pro Tag, so können diese Entitäts-Daten zusammen mit manuell vorgegebenen oder angepassten Bewertungs-Daten, die als Maßnahme einen Techniker-Einsatz innerhalb von 8 Stunden erfordern in der Sammlung aufgenommen werden.

Wenn anschließend ein entsprechender Fehler der Motorsteuerung bei der spezifischen Entität auftritt, könnte abhängig von der Lokalität der spezifischen Entität ein Techniker-Einsatz von zwischen 1 und 8 Stunden als Maßnahme vorgeschlagen werden, etwa über ein entsprechend indikatives Kontrollsignal. Welche Maßnahme genau vorgeschlagen wird, kann durch die Implementierung des Prozessierungs-Moduls festgelegt werden. Beispielsweise können entweder die eine oder die andere Bewertungs-Daten (bzw. Maßnahme, also 1 oder 8 Stunden) ermittelt werden, oder auch ein dazwischen liegender Wert, etwa 3,5 Stunden.

Die Aufgabe wird durch die Erfindung gemäß einem zweiten Aspekt dadurch gelöst, dass eine Vorrichtung, insbesondere Vorrichtung zur Datenverarbeitung, wie ein Server oder Cloud-System, die dazu eingerichtet ist, ein Verfahren gemäß dem ersten Aspekt der Erfindung auszuführen vorgeschlagen wird.

Damit kann das Verfahren gemäß dem ersten Aspekt der Erfindung besonders einfach durchgeführt werden. Beispielsweise kann die Vorrichtung zumindest zeitweise während der Durchführung des Verfahrens mit der Entität, der ersten und/oder der zweiten Quelle gekoppelt werden. Beispielsweise kann die Vorrichtung und die Entität bzw. die Quellen mittels einer Funkschnittstelle, wie insbesondere Wireless LAN, RFID oder Bluetooth, einer Kabelverbindung, wie LAN oder USB, oder über das Internet miteinander verbunden werden, so dass beide Daten miteinander austauschen können.

In einer Ausführungsform stellt die Vorrichtung wenigstens ein Computer, insbesondere wenigstens ein Server, ein Computernetzwerk und/oder ein Cloud-System, dar oder weist diese(n/s) auf.

Vorzugsweise weist die Vorrichtung einen Prozessor und/oder einen Speicher auf. Der Prozessor kann beispielsweise eingerichtet sein, das Verfahren auszuführen. Die Vorrichtung kann auch das Prozessierungs-Modul aufweisen.

Die Aufgabe wird durch die Erfindung gemäß einem dritten Aspekt dadurch gelöst, dass ein Verfahren, wobei das Verfahren vorzugsweise mit einem Verfahren gemäß dem ersten Aspekt der Erfindung zusammenwirkt, das Verfahren aufweisend:
Senden von Entitäts-Daten einer Entität, wobei vorzugsweise die Entitäts-Daten der Entität zumindest Teile der im Verfahren gemäß dem ersten Aspekt der Erfindung empfangenen Entitäts-Daten der spezifischen Entität aufweisen oder darstellen;
   und/oder
Empfangen eines Kontrollsignals, wobei vorzugsweise das Kontrollsignal das gemäß dem ersten Aspekt der Erfindung gesendete Kontrollsignal aufweist oder darstellt vorgeschlagen wird.

In einer Ausführungsform werden die Entitäts-Daten ganz oder teilweise von Seiten der Entität empfangen. Diese können dann anschließend gesendet werden. Das Kontrollsignal kann die Entitäts-Daten und/oder Bewertungs-Daten gemäß dem ersten Aspekt der Erfindung aufweisen oder indikativ dafür sein.

In einer Ausführungsform ist das Verfahren computer-implementiert.

In einer Ausführungsform wird das Verfahren von wenigstens einem Client, insbesondere einem Smartphone, und/oder einer Entität, wie eine automatische Anlage, insbesondere eine automatische Tür-, Tor-, Fenster- und/oder Lichtanlage, oder einem ihrer Teile, wie ein Steuermodul, ausgeführt. Das Verfahren kann alternativ oder ergänzend durch ein eingebettetes System und/oder durch ein Betriebssystem ausgeführt werden.

Die Aufgabe wird durch die Erfindung gemäß einem vierten Aspekt dadurch gelöst, dass eine Vorrichtung, insbesondere Vorrichtung zur Datenverarbeitung, wie ein Client, die dazu eingerichtet ist, ein Verfahren gemäß dem dritten Aspekt der Erfindung auszuführen vorgeschlagen wird.

Damit kann das Verfahren gemäß dem dritten Aspekt der Erfindung besonders einfach ausgeführt werden. Beispielsweise kann die Vorrichtung zumindest zeitweise während der Durchführung des Verfahrens mit einem Server und/oder der Entität gekoppelt werden. Beispielsweise kann die Vorrichtung und der Server bzw. die Entität mittels einer Funkschnittstelle, wie insbesondere Wireless LAN, RFID oder Bluetooth, einer Kabelverbindung, wie LAN oder USB, oder über das Internet miteinander verbunden werden, so dass beide Daten miteinander austauschen können. Beispielsweise kann damit ein Client, wie ein Smartphone, mit der Entität gekoppelt sein und die Entitäts-Daten ganz oder teilweise von dieser empfangen und diese Daten dann an eine zentrale Instanz, wie einen Server, senden, welche wiederum ein Verfahren gemäß dem ersten Aspekt der Erfindung ausführen kann.

In einer Ausführungsform ist die Vorrichtung Teil einer von der Entität umfassten Steuereinheit oder stellt diese dar. Optional ist die Entität eine automatische Anlage, wie eine automatische Tür-, Tor-, Fenster- und/oder Lichtanlage. Die Vorrichtung kann alternativ oder ergänzend ein eingebettetes System aufweisen oder darstellen.

In einer Ausführungsform ist die Vorrichtung ein, vorzugsweise von der Entität unterschiedlicher, Client, insbesondere ein mobiles Telekommunikationsgerät, wie insbesondere einem Smartphone.

Vorzugsweise weist die Vorrichtung einen Prozessor und/oder einen Speicher auf. Der Prozessor kann beispielsweise eingerichtet sein, das Verfahren auszuführen.

Die Aufgabe wird durch die Erfindung gemäß einem fünften Aspekt dadurch gelöst, dass ein Verfahren zum Generieren eines Trainings-Datensatzes, der vorzugsweise zum Trainieren des Datenmodells für das maschinelle Lernen, das von dem Prozessierungs-Modul in einem Verfahren gemäß dem ersten Aspekt der Erfindung umfasst ist, verwendet werden kann oder verwendet wird, das Verfahren aufweisend:
Bereitstellen von Entitäts-Daten einer Entität und einen oder mehreren von mit den Entitäts-Daten assoziierten Bewertungs-Daten der Entität, wobei vorzugsweise die Entitäts-Daten als spezifische Entitäts-Daten in einem Verfahren gemäß dem ersten Aspekt der Erfindung empfangen wurden;
Erstellen eines Merkmals-Vektors, der die Entitäts-Daten aufweist;
Erstellen eines Wahrheits-Vektors, der die Bewertungs-Daten repräsentiert und/oder aufweist; und/oder
Assoziieren des Merkmals- und des Wahrheits-Vektors miteinander;
   und
Wiederholen des Vorstehenden für eine Vielzahl von Entitäten, um eine Vielzahl von miteinander assoziierten Merkmals- und Wahrheits-Vektoren zu erhalten, die den Trainings-Datensatz darstellen vorgeschlagen wird.

Es ist überraschend, dass in besonders zuverlässiger Weise etwa in einem Verfahren gemäß dem ersten Aspekt der Erfindung spezifische Bewertungs-Daten für eine spezifische Entität mittels eines Datenmodells für das maschinelle Lernen erhalten werden können, indem das Datenmodell für das maschinelle Lernen auf dem vorgeschlagenen Trainings-Datensatz trainiert wurde.

Daher bietet der vorgeschlagene Trainings-Datensatz eine bevorzugte Basis, um alle Vorteile die oben in Bezug auf die ersten bis vierten Aspekte der Erfindung genannt wurden ausnutzen zu können. Es kann daher auch auf die vorteilhaften Effekte verwiesen werden, die in diesem Zusammenhang dort erörtert wurden.

In einer Ausführungsform werden für den Trainings-Datensatz nur Entitäts-Daten und Bewertungs-Daten bestimmter Entitäten verwendet. Beispielsweise nur in Bezug auf Entitäten eines bestimmten Typs, eines bestimmten Modells eines Typs, einer bestimmten Variante eines Modells und/oder einer bestimmten Version einer Variante. Dies macht den Trainings-Datensatz wirkungsvoller, etwa wenn das Datenmodell für das maschinelle Lernen für einer entsprechend speziellen spezifischen Entität eingesetzt werden soll.

In einer Ausführungsform sind die Entitäts-Daten und/oder die Bewertungs-Daten aus der Sammlung von Daten gemäß dem ersten Aspekt der Erfindung.

Die Aufgabe wird durch die Erfindung gemäß einem sechsten Aspekt dadurch gelöst, dass ein Verfahren zum Trainieren eines Datenmodells für das maschinelle Lernen, vorzugsweise zum Trainieren des Datenmodells für das maschinelle Lernen des Prozessierungs-Moduls in einem Verfahren gemäß dem ersten Aspekt der Erfindung, wobei das Verfahren aufweist:
Bereitstellen eines Trainings-Datensatzes, der eine Vielzahl von miteinander assoziierten Merkmals-Vektoren und Wahrheits-Vektoren aufweist, wobei vorzugsweise der Trainings-Datensatz mittels des Verfahrens gemäß dem fünften Aspekt der Erfindung generiert wird oder werden kann;
Registrieren des Eingangs des Datenmodells für das maschinelle Lernen mit einem Merkmals-Vektor des Trainings-Datensatzes;
Berechnen des Datenmodells für das maschinelle Lernen vom Eingang zum Ausgang;
Vergleichen des Ausgangs des Datenmodells für das maschinelle Lernen mit dem mit dem Merkmals-Vektor assoziierten Wahrheits-Vektor und Bestimmen eines Fehler-Vektors zwischen den beiden; und/oder
Anpassen des Datenmodells für das maschinelle Lernen basierend auf dem bestimmten Fehler-Vektor; und
Wiederholen des Vorstehenden für alle anderen Merkmals-Vektoren und assoziierten Wahrheits-Vektoren des Trainings-Datensatzes vorgeschlagen wird.

Es ist überraschend, dass in besonders zuverlässiger Weise etwa in einem Verfahren gemäß dem ersten Aspekt der Erfindung spezifische Bewertungs-Daten für eine spezifische Entität mittels eines Datenmodells für das maschinelle Lernen erhalten werden können, indem das Datenmodell für das maschinelle Lernen auf die vorgeschlagene Weise trainiert wurde.

Daher bietet das vorgeschlagene Trainings-Verfahren eine bevorzugte Basis, um alle Vorteile die oben in Bezug auf die ersten bis vierten Aspekte der Erfindung genannt wurden ausnutzen zu können. Es kann daher auch auf die vorteilhaften Effekte verwiesen werden, die in diesem Zusammenhang dort erörtert wurden.

Die Aufgabe wird durch die Erfindung gemäß einem siebenten Aspekt dadurch gelöst, dass ein Computerprogrammprodukt, umfassend Befehle, die bei der Ausführung des Programms durch eine Vorrichtung zur Datenverarbeitung, insbesondere die Vorrichtung gemäß dem zweiten Aspekt der Erfindung und/oder gemäß dem vierten Aspekt der Erfindung, diese veranlassen, das Verfahren gemäß dem ersten Aspekt der Erfindung und/oder gemäß dem dritten Aspekt der Erfindung auszuführen vorgeschlagen wird.

Ein Computerprogrammprodukt kann beispielsweise als CD, DVD, ROM/RAM, Blue-Ray-Disc, USB-Speicher, SSD-Speicher, magnetische Festplatte, und/oder dergleichen ausgestaltet sein. Ein Computerprogrammprodukt kann alternativ oder ergänzend auch als, vorzugsweise auf einem computerlesbaren Medium abgespeicherte oder abspeicherbare, Datei ausgestaltet sein. Die Datei kann dann beispielsweise, insbesondere auf einer Vorrichtung zur Datenverarbeitung, ausführbar sein, um das Verfahren ausführen zu können.

Vorzugsweise wird dabei das Verfahren gemäß dem ersten Aspekt der Erfindung durch die Vorrichtung gemäß dem zweiten Aspekt der Erfindung und/oder das Verfahren gemäß dem dritten Aspekt der Erfindung durch die Vorrichtung gemäß dem vierten Aspekt der Erfindung ausgeführt.

Die Aufgabe wird durch die Erfindung gemäß einem achten Aspekt dadurch gelöst, dass eine Signalfolge, repräsentierend Befehle, die, wenn sie auf einer Vorrichtung zur Datenverarbeitung, insbesondere die Vorrichtung gemäß dem zweiten Aspekt der Erfindung und/oder gemäß dem vierten Aspekt der Erfindung, ausgeführt werden, die Vorrichtung veranlassen, das Verfahren gemäß dem ersten Aspekt der Erfindung und/oder gemäß dem dritten Aspekt der Erfindung auszuführen vorgeschlagen wird.

Die Signalfolge kann beispielsweise über ein Computernetzwerk, wie dem Internet, übertragbar sein. Beispielsweise kann die Signalfolge das Computerprogrammprodukt repräsentieren, insbesondere als aus dem Computernetzwerk herunterladbare Datei.

Vorzugsweise wird dabei das Verfahren gemäß dem ersten Aspekt der Erfindung durch die Vorrichtung gemäß dem zweiten Aspekt der Erfindung und/oder das Verfahren gemäß dem dritten Aspekt der Erfindung durch die Vorrichtung gemäß dem vierten Aspekt der Erfindung ausgeführt.

### Kurze Beschreibung der Zeichnungen

Weitere Merkmale und Vorteile der Erfindung ergeben sich aus der nachfolgenden Beschreibung, in der bevorzugte Ausführungsformen der Erfindung anhand schematischer Zeichnungen erläutert werden.

Dabei zeigen:
- Fig. 1: ein Ablaufdiagramm eines Verfahrens gemäß dem ersten Aspekt der Erfindung;
- Fig. 2: eine Vorrichtung gemäß dem zweiten Aspekt der Erfindung, die dazu eingerichtet ist, das Verfahren gemäß dem ersten Aspekt der Erfindung auszuführen;
- Fig. 3: ein Ablaufdiagramm eines Verfahrens gemäß dem dritten Aspekt der Erfindung;
- Fig. 4: eine Vorrichtung gemäß dem vierten Aspekt der Erfindung, die dazu eingerichtet ist, das Verfahren gemäß dem dritten Aspekt der Erfindung auszuführen; und
- Fig. 5: ein System aus mehreren Teilnehmern.

### Beschreibung der Ausführungsformen

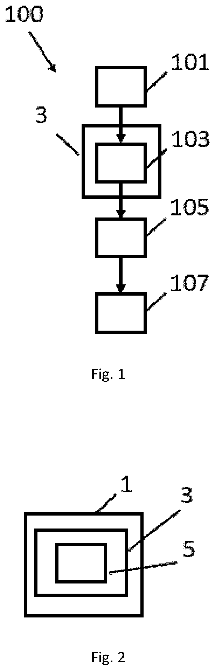

Fig. 1 zeigt ein Ablaufdiagramm 100 eines Verfahrens gemäß dem ersten Aspekt der Erfindung.
Fig. 2 zeigt eine Vorrichtung 1, die als Server ausgestaltet, gemäß dem zweiten Aspekt der Erfindung. Die Vorrichtung 1 ist dazu eingerichtet, das Verfahren gemäß dem ersten Aspekt der Erfindung auszuführen.

Mit dem Verfahren sollen die Zustände einer Vielzahl von Entitäten, insbesondere in Form von automatischen Türanlagen, überwacht werden.

In 101 werden spezifische Entitäts-Daten einer spezifischen Entität empfangen. Diese Entitäts-Daten weisen dabei Daten zu aktuellen Betriebsdaten der spezifischen Entität und zu einem aktuellen Zustand der spezifischen Entität auf. Außerdem werden weitere spezifische Entitäts-Daten in Form von Dokumentationsunterlagen zu der spezifischen Entität von Seiten eines ERP-Systems empfangen.

In 103 werden diese empfangenen spezifischen Entitäts-Daten mittels eines von der Vorrichtung 1 aufgewiesenen Prozessierungs-Moduls 3 verarbeitet. Das Prozessierungs-Modul 3 weist ein trainiertes Datenmodell für das maschinelle Lernen 5 auf. Dieses wurde anhand einer Vielzahl von Merkmals-Vektoren und zugehörigen Wahrheits-Vektoren trainiert. Ein Merkmals-Vektor weist dabei die Entitäts-Daten einer Entität auf und der zugehörige Wahrheitsvektor weist mit diesen Entitäts-Daten assoziierten Bewertungs-Daten auf oder repräsentiert diese. Aus zumindest Teilen der empfangenen spezifischen Entitäts-Daten wird daher in 103 ein Eingangsvektor gebildet und dem trainierten Datenmodell für das maschinelle Lernen 5 zugeführt. Das trainierte Datenmodell für das maschinelle Lernen 5 ermittelt daraufhin die spezifischen Bewertungs-Daten.

In 105 wird ein Kontrollsignal basierend auf den spezifischen Bewertungs-Daten erzeugt. Das Kontrollsignal ist dabei indikativ für die Art des spezifischen Zustands der spezifischen Entität, für mögliche Ursache des spezifischen Zustands der spezifischen Entität und für empfohlene Maßnahmen in Bezug auf den spezifischen Zustand der spezifischen Entität. Außerdem weist das Kontrollsignal noch die Dokumentationsunterlagen zu der spezifischen Entität als weitere Daten auf.

Das Kontrollsignal wird in 107 an einen Client gesendet. Dort liegen dann alle Daten vor.

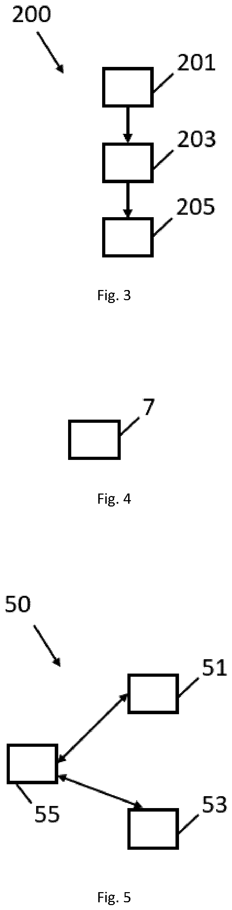

Fig. 3 zeigt ein Ablaufdiagramm 200 eines Verfahrens gemäß dem dritten Aspekt der Erfindung.

Fig. 4 zeigt eine Vorrichtung 7, die als Smartphone ausgestaltet ist, gemäß dem vierten Aspekt der Erfindung. Die Vorrichtung 7 ist dazu eingerichtet, das Verfahren gemäß dem dritten Aspekt der Erfindung auszuführen.

In 201 werden Entitäts-Daten einer Entität von Seiten der Entität empfangen.

In 203 werden die Entitäts-Daten der Entität an einen Server gesendet. Dies können beispielsweise zumindest Teile der in 101 empfangenen spezifischen Entitäts-Daten sein.

In 205 wird ein Kontrollsignal empfangen. Dies kann beispielsweise das in 107 gesendete Kontrollsignal sein. Damit können Maßnahmen auf Basis des Kontrollsignals an der Entität durchgeführt werden.

Mit dem Verfahren können so beispielsweise im Rahmen eines routinemäßigen Wartungs-Einsatzes einer Entität mit dem Smartphone Entitäts-Daten von Seiten der Entität abgerufenen werden und diese dann an eine zentrale Überwachungsinstanz in Form eines Servers gesendet werden. Von dort werden Bewertungs-Daten zum Zustand der Entität in Form des Kontrollsignals durch das Smartphone empfangen. Damit kann die Wartung sehr effizient durchgeführt werden.

Fig. 5 zeigt ein System 50 aus mehreren Teilnehmern. Die Teilnehmer sind ein Server 51, eine Entität 53 und ein Client 55. Der Server 51 und der Client 55 sowie der Client 55 und die Entität 53 stehen miteinander in Kommunikation und können jeweils über einen Kommunikationskanal Daten miteinander austauschen. Optional kann der Server 51 noch mit einem nicht dargestellten ERP-System in Kommunikation stehen.

Der Server 51 ist dazu eingerichtet, ein Verfahren gemäß dem ersten Aspekt der Erfindung auszuführen. Beispielsweise kann dies das in Bezug auf Fig. 1 beschriebene Verfahren sein. Der Client 55 ist dazu eingerichtet, ein Verfahren gemäß dem dritten Aspekt der Erfindung auszuführen. Beispielsweise kann dies das in Bezug auf Fig. 3 beschriebene Verfahren sein. Die Entität 53 kann beispielsweise eine automatische Türanlage sein. Der Client 53 kann beispielsweise ein Smartphone sein, oder eine mobile Anwendung (APP) auf dem Smartphone.

Der Server 51 und der Client 55 stehen über eine IP-Verbindung, etwa über das Internet, miteinander in Kommunikation. Die Entität 53 und der Client 55 stehen über Bluetooth miteinander in Kommunikation.

In der dargestellten Situation kann der Client 55 Entitäts-Daten von der Entität 53 empfangen und diese an den Server 51 senden. Dort werden spezifische Bewertungs-Daten zumindest anhand der von dem Client 55 empfangenen spezifischen Entitäts-Daten ermittelt und ein Kontrollsignal erzeugt. Das Kontrollsignal kann außerdem spezifische Entitäts-Daten aufweisen, die der Server 51 von Seiten eines ERP-Systems empfangen hat. Das Kontrollsignal wird an den Client 55 gesendet. Dort können basierend auf dem Kontrollsignal geeignete Maßnahmen ergriffen werden, um die Funktion der Entität 53 zu gewährleisten und/oder wiederherzustellen.

Die einzelnen Verfahren und ihre Ausführungsformen wurden vorstehend teilweise anhand von Vorrichtungen erläutert, die jeweils dazu eingerichtet sind, das entsprechende Verfahren auszuführen. Es versteht sich von selbst, dass die Erläuterungen aber gleichermaßen auch für die isolierten Verfahren gelten.

Die in der vorangehenden Beschreibung, in den Zeichnungen und in den Ansprüchen offenbarten Merkmale können sowohl einzeln als auch in beliebiger Kombination wesentlich für die Erfindung in ihren verschiedenen Ausführungsformen sein.

### Bezugszeichenliste

- 1: Vorrichtung
- 3: Prozessierungs-Modul
- 5: Datenmodell für das maschinelle Lernen
- 7: Vorrichtung
- 50: System
- 51: Server
- 53: Entität
- 55: Client
- 100: Ablaufdiagramm
- 101: Empfangen von spezifischen Entitäts-Daten
- 103: Verarbeiten der spezifischen Entitäts-Daten und ermitteln spezifischer Bewertungs-Daten
- 105: Erzeugen eines Kontrollsignals
- 107: Senden des Kontrollsignals
- 200: Ablaufdiagramm
- 201: Empfangen von Entitäts-Daten
- 203: Senden der Entitäts-Daten
- 205: Empfangen eines Kontrollsignals

## Patentansprüche

1. Verfahren zum Überwachen von Zuständen von einer oder mehreren Entitäten, aufweisend:
Empfangen (101) von spezifischen Entitäts-Daten einer spezifischen Entität;
Ermitteln (103), wenigstens basierend auf zumindest einigen der empfangenen spezifischen Entitäts-Daten mittels eines Prozessierungs-Moduls (3), von einer oder mehreren spezifischen Bewertungs-Daten in Bezug auf wenigstens einen spezifischen Zustand der spezifischen Entität;
wobei die Entitäten automatische Türanlagen, automatische Toranlagen, automatische Fensteranlagen und/oder automatische Lichtanlagen aufweisen und/oder darstellen.

2. Verfahren nach Anspruch 1, wobei
die empfangenen spezifischen Entitäts-Daten Daten aus wenigstens einer, insbesondere aus zwei, drei oder mehr als drei unterschiedlichen, Daten-Gruppe aufweisen, wobei vorzugsweise die Daten-Gruppe(n) ausgewählt ist bzw. sind aus der folgenden Liste von Daten-Gruppen aufweisend:
- Erste Daten-Gruppe: Daten zu wenigstens einem aktuellen Zustand der spezifischen Entität;
- Zweite Daten-Gruppe: Daten zu wenigstens aktuellen Betriebsdaten der spezifischen Entität;
- Dritte Daten-Gruppe: Daten zu wenigstens einem aktuell bestehenden Fehler der spezifischen Entität;
- Vierte Daten-Gruppe: Daten zu wenigstens einem bestehenden und noch nicht behobenen Fehler der spezifischen Entität;
- Fünfte Daten-Gruppe: Daten zu den Konfigurationsmöglichkeiten der spezifischen Entität;
- Sechste Daten-Gruppe: Daten zu der aktuellen Konfiguration der spezifischen Entität;
- Siebente Daten-Gruppe: Daten zu wenigstens einer Eigenschaft der spezifischen Entität;
- Achte Daten-Gruppe: Daten zu der Lokation der spezifischen Entität;
- Neunte Daten-Gruppe: Daten zum Kunden, Betreiber und/oder Besitzer der spezifischen Entität;
- Zehnte Daten-Gruppe: Daten zur Dokumentation der spezifischen Entität;
- Elfte Daten-Gruppe: Daten zu der Einbausituation der spezifischen Entität; und/oder
- Zwölfte Daten-Gruppe: Daten zu historischen Zuständen der spezifischen Entität, insbesondere in Verbindung mit Daten zu der Konfiguration der spezifischen Entität zum Zeitpunkt eines jeweiligen historischen Zustands.

3. Verfahren nach einem der vorangehenden Ansprüche, wobei
das Empfangen der spezifischen Entitäts-Daten aufweist:
Empfangen von ersten Daten zu der spezifischen Entität, insbesondere von Seiten wenigstens einer ersten Quelle, vorzugsweise von Seiten der spezifischen Entität, wobei vorzugsweise die ersten Daten Daten der ersten, zweiten, dritten, vierten, fünften, sechsten, siebenten und/oder zwölften Daten-Gruppe aufweisen;
und/oder
Empfangen von zweiten Daten zu der spezifischen Entität, insbesondere von Seiten wenigstens einer zweiten Quelle, vorzugsweise aus einem Speicher und/oder von Seiten eines ERP-Systems, wobei vorzugsweise die zweiten Daten Daten der fünften, sechsten, siebenten, achten, neunten, zehnten, elften und/oder zwölften Daten-Gruppe aufweisen.

4. Verfahren nach einem der vorangehenden Ansprüche, wobei das Verfahren ferner aufweist:
(i) Erzeugen (105) eines Kontrollsignals basierend wenigstens auf den und/oder in Abhängigkeit der spezifischen Bewertungs-Daten, wobei vorzugsweise das Erzeugen des Kontrollsignals das Analysieren und/oder Verarbeiten der spezifischen Bewertungs-Daten und/oder zumindest einige der spezifischen Entitäts-Daten aufweist,
und wobei vorzugsweise das Kontrollsignal indikativ ist für wenigstens ein Ergebnis der Analyse bzw. Verarbeitung, es insbesondere indikativ ist für
- eine Art des spezifischen Zustands der spezifischen Entität, wie beispielsweise in Form eines Betriebszustands, insbesondere eines Online- und/oder Offline-Zustandes, und/oder eines Fehlerstatus;
- eine Ursache oder mögliche Ursache des spezifischen Zustands der spezifischen Entität, beispielsweise in Form eines Fehlerstatus;
- eine Notwendige oder empfohlene Maßnahmen in Bezug auf den spezifischen Zustand der spezifischen Entität, wie beispielsweise, dass eine Wartung fällig ist;
und/oder
- eine Kritikalität des spezifischen Zustands der spezifischen Entität;
(ii) Auswählen, Ausführen und/oder Kontrollieren wenigstens eines Moduls basierend auf dem Kontrollsignal, insbesondere basierend darauf, für was es indikativ ist;
und/oder
(iii) Senden (107) des Kontrollsignals an wenigstens einen Empfänger.

5. Verfahren nach einem der vorangehenden Ansprüche, wobei
das Prozessierungs-Modul aufweist, dass die spezifischen Bewertungs-Daten ferner basierend auf einer Sammlung aufweisend mehrere jeweils miteinander assoziierten Entitäts-Daten und zugehörigen Bewertungs-Daten ermittelt werden.

6. Verfahren nach einem der vorangehenden Ansprüche, wobei
das Prozessierungs-Modul aufweist, dass eine Korrelation wenigstens zwischen einem Teil der empfangenen spezifischen Entitäts-Daten und Entitäts-Daten der Sammlung von Daten durchgeführt wird, und dass aus der Sammlung diejenigen Bewertungs-Daten als spezifische Bewertungs-Daten verwendet werden, die mit Entitäts-Daten assoziiert sind, für die die Korrelation einen maximalen Korrelationswert aufweist;
und/oder
das Prozessierungs-Modul wenigstens ein trainiertes Datenmodell für das maschinelle Lernen (5) aufweist, und vorzugsweise das Datenmodell für das maschinelle Lernen anhand einer Vielzahl von Merkmals-Vektoren und zugehörigen Wahrheits-Vektoren trainiert wurde, wobei mittels des Datenmodells für das maschinelle Lernen anhand der zumindest einigen der empfangenen spezifischen Entitäts-Daten die spezifischen Bewertungs-Daten ermittelt werden,
wobei vorzugsweise die Merkmals- und zugehörigen Wahrheitsvektoren jeweils die miteinander assoziierten Entitäts-Daten und Bewertungs-Daten der Sammlung von Daten aufweisen oder darstellen.

7. Verfahren nach einem der vorangehenden Ansprüche, wobei das Verfahren ferner aufweist:
Anpassen der Sammlung von Daten anhand zumindest eines Teils der spezifischen Entitäts-Daten und/oder anhand zumindest eines Teils der spezifischen Bewertungs-Daten, wobei das Anpassen der Sammlung vorzugsweise aufweist, dass zumindest Teile dieser Daten miteinander assoziiert werden, in der Sammlung aufgenommen werden und/oder das Datenmodell für das maschinelle Lernen darauf trainiert wird.

8. Vorrichtung (1), insbesondere Vorrichtung zur Datenverarbeitung, wie ein Server oder Cloud-System, die dazu eingerichtet ist, ein Verfahren nach einem der vorangehenden Ansprüche auszuführen.

9. Verfahren, wobei das Verfahren vorzugsweise mit einem Verfahren nach einem der Ansprüche 1 bis 7 zusammenwirkt, das Verfahren aufweisend:
Senden (203) von Entitäts-Daten einer Entität, wobei vorzugsweise die Entitäts-Daten der Entität zumindest Teile der in Anspruch 1 empfangenen Entitäts-Daten der spezifischen Entität aufweisen oder darstellen;
und/oder
Empfangen (205) eines Kontrollsignals, wobei vorzugsweise das Kontrollsignal das in Anspruch 4 gesendete Kontrollsignal aufweist oder darstellt.

10. Vorrichtung (7), insbesondere Vorrichtung zur Datenverarbeitung, wie ein Client, die dazu eingerichtet ist, ein Verfahren nach Anspruch 9 auszuführen.

11. Verfahren zum Generieren eines Trainings-Datensatzes, der vorzugsweise zum Trainieren des Datenmodells für das maschinelle Lernen, das von dem Prozessierungs-Modul in einem Verfahren nach einem der Ansprüche 1 bis 7 umfasst ist, verwendet werden kann oder verwendet wird, das Verfahren aufweisend:
Bereitstellen von Entitäts-Daten einer Entität und einen oder mehreren von mit den Entitäts-Daten assoziierten Bewertungs-Daten der Entität, wobei vorzugsweise die Entitäts-Daten als spezifische Entitäts-Daten in einem Verfahren nach einem der Ansprüche 1 bis 7 empfangen wurden;
Erstellen eines Merkmals-Vektors, der die Entitäts-Daten aufweist;
Erstellen eines Wahrheits-Vektors, der die Bewertungs-Daten repräsentiert und/oder aufweist; und/oder
Assoziieren des Merkmals- und des Wahrheits-Vektors miteinander;
und
Wiederholen des Vorstehenden für eine Vielzahl von Entitäten, um eine Vielzahl von miteinander assoziierten Merkmals- und Wahrheits-Vektoren zu erhalten, die den Trainings-Datensatz darstellen.

12. Verfahren zum Trainieren eines Datenmodells für das maschinelle Lernen, vorzugsweise zum Trainieren des Datenmodells für das maschinelle Lernen des Prozessierungs-Moduls in einem Verfahren nach einem der Ansprüche 1 bis 7, wobei das Verfahren aufweist:
Bereitstellen eines Trainings-Datensatzes, der eine Vielzahl von miteinander assoziierten Merkmals-Vektoren und Wahrheits-Vektoren aufweist, wobei vorzugsweise der Trainings-Datensatz mittels des Verfahrens nach Anspruch 11 generiert wird oder werden kann;
Registrieren des Eingangs des Datenmodells für das maschinelle Lernen mit einem Merkmals-Vektor des Trainings-Datensatzes;
Berechnen des Datenmodells für das maschinelle Lernen vom Eingang zum Ausgang;
Vergleichen des Ausgangs des Datenmodells für das maschinelle Lernen mit dem mit dem Merkmals-Vektor assoziierten Wahrheits-Vektor und Bestimmen eines Fehler-Vektors zwischen den beiden; und/oder
Anpassen des Datenmodells für das maschinelle Lernen basierend auf dem bestimmten Fehler-Vektor;
und
Wiederholen des Vorstehenden für alle anderen Merkmals-Vektoren und assoziierten Wahrheits-Vektoren des Trainings-Datensatzes.

13. Computerprogrammprodukt, umfassend Befehle, die bei der Ausführung des Programms durch eine Vorrichtung zur Datenverarbeitung, insbesondere die Vorrichtung nach Anspruch 8 und/oder nach Anspruch 10, diese veranlassen, das Verfahren nach einem der Ansprüche 1-7 und/oder nach Anspruch 9 auszuführen.

14. Signalfolge, repräsentierend Befehle, die, wenn sie auf einer Vorrichtung zur Datenverarbeitung, insbesondere die Vorrichtung nach Anspruch 8 und/oder nach Anspruch 10, ausgeführt werden, die Vorrichtung veranlassen, das Verfahren nach einem der Ansprüche 1-7 und/oder nach Anspruch 9 auszuführen.
